# FASCICULE DE BREVET EUROPEEN

(11) **EP 2 635 835 B1**
(45) Date de publication et mention de la délivrance du brevet: **22.02.2017**
(21) Numéro de dépôt: 11832141.3
(22) Date de dépôt: 28.10.2011
(51) Int. Cl.: F16L 23/08, F16B 2/08

(54) **COLLIER DE SERRAGE ARTICULE**
SPANNSCHELLE MIT SCHARNIER
HINGED CLAMPING COLLAR

(30) Priorité: 05.11.2010 FR 1059150
(43) Date de publication de la demande: 11.09.2013
(60) Demande divisionnaire: 15197629.7
(73) Titulaire: Etablissements Caillau, 92130 Issy-les-Moulineaux (FR)
(72) Inventeur: RIGOLLET, Nicolas, F-41200 Romorantin (FR); PREVOT, Fabrice, F-41130 Selles Sur Cher (FR)
(74) Mandataire: Intès, Didier Gérard André
(86) Numéro de dépôt international: PCT/FR2011/052538
(87) Numéro de publication internationale: WO 2012/059675

(56) Documents cités:
- WO-A1-98/43010
- WO-A1-2009/155640
- FR-A1- 2 756 356
- FR-A1- 2 775 753
- FR-A1- 2 902 175
- GB-A- 2 446 813
- US-A- 875 019
- US-A1- 2005 253 380

## Description

La présente invention concerne un collier de serrage comprenant une ceinture ayant deux portions de ceinture présentant chacune une première extrémité munie d'une patte de serrage et une deuxième extrémité munie d'un organe d'assemblage, les organes d'assemblage étant aptes à coopérer entre eux pour assembler lesdites deuxièmes extrémités de manière amovible, le collier comportant en outre des moyens de serrage aptes à coopérer avec les pattes de serrage pour déplacer ces pattes l'une par rapport à l'autre alors que les deuxièmes extrémités sont assemblées, de manière à serrer le collier.

Un collier de ce type est connu par le document WO 98/43010. Dans ce collier connu, les moyens de serrage comprennent une vis dont le fût traverse des perçages des pattes de serrage. La ceinture est formée de deux demi-ceintures s'étendant chacune entre une patte de serrage et un organe d'assemblage. La vis est pré-montée sur les pattes de serrage, et est montée lâche par rapport à ces dernières pour autoriser un débattement suffisant des deux demi-ceintures. En effet, pour monter le collier sur l'objet devant être serré, les demi-ceintures sont écartées alors que la vis est en place, sont disposées autour de l'objet, et sont refermées l'une sur l'autre par les moyens d'assemblage qui équipent les deuxièmes extrémités respectives des demi-ceintures.

Ce collier donne satisfaction en ce que, pour le monter autour de l'objet devant être serré, il n'est pas nécessaire de démonter les moyens de serrage. Cependant, pour faire coopérer les organes d'assemblage entre eux, les deuxièmes extrémités des demi-ceintures doivent être correctement positionnées l'une par rapport à l'autre, ce qui s'avère être une manipulation délicate. En effet, les déplacements relatifs des deux demi-ceintures ne sont pas contrôlés, de sorte qu'il est parfois délicat de les positionner correctement l'une par rapport à l'autre. De plus, les moyens de serrage doivent rester accessibles une fois le collier monté, et sont donc en général du côté visible pour l'opérateur, tandis que les organes d'assemblage qui équipent les deuxièmes extrémités de ceinture sont en général pas ou peu visibles et difficilement accessibles.

Le brevet US 875,019 divulgue un collier de serrage dont les deuxièmes extrémités des portions de ceinture peuvent être assemblées par accrochage. Les premières extrémités des portions de ceinture coopèrent entre elles, d'une part par des moyens de serrage à vis et, d'autre part, par des crémaillères. Pour le montage, les deuxièmes extrémités sont d'abord accrochées ensemble, puis les premières extrémités sont rapprochées l'une de l'autre et les crémaillères qu'elles portent s'engagent pour éviter que le collier ne s'ouvre sous l'effet de l'effort de réaction exercé par l'objet qu'il entoure. Enfin, la vis de serrage est mise en place et serrée.

Contrairement à celui de WO 98/43010, ce collier ne peut pas être monté autour de l'objet à serrer, alors que la vis de serrage est en place.

Le document US 2005/0253380 divulgue un collier de serrage dont les deux portions de ceintures sont reliées par des vis de serrage à chacune de leurs extrémités et dans lequel des entretoises sont disposées entre ces extrémités.

La présente invention vise à améliorer l'état de la technique précité en proposant un collier qui permette, alors que les moyens de serrage sont en place sur les pattes de serrage, de monter aisément le collier sur un objet devant être serré, en facilitant l'assemblage des deuxièmes extrémités des portions de ceinture à l'aide des organes d'assemblage qui les équipent.

Ce but est atteint grâce aux caractéristiques de la revendication 1.

Grâce au pont, les pattes de serrage sont initialement maintenues dans une position déterminée, correspondant à l'état libre, non serré du collier. Le pont permet également de maintenir l'une par rapport à l'autre les deux portions de ceinture. Lors du serrage, la configuration du pont est modifiée (en particulier, le pont se déforme et/ou se casse), de sorte que le pont ne gêne pas le serrage. A l'état non serré du collier, les deuxièmes extrémités des deux portions de ceinture peuvent être rapprochées l'une de l'autre jusqu'à faire coopérer entre eux les organes d'assemblage. Lors de ces déplacements des portions de ceinture, celles-ci sont tenues l'une par rapport à l'autre par le pont. Ainsi, grâce au pont, ces déplacements peuvent être maîtrisés, ce qui signifie que les déplacements relatifs des portions de ceinture s'effectuent selon des trajectoires déterminées par le pont. Le pont forme donc une articulation entre les deux portions de ceinture qui évite leurs débattements relatifs dans des directions non souhaitées. En particulier, les deux portions de ceinture peuvent, tout en se déplaçant l'une par rapport à l'autre, rester dans le plan global du collier, c'est-à-dire que les organes d'assemblage qui équipent leurs deuxièmes extrémités restent en registre l'un par rapport à l'autre, sans se décaler selon la direction axiale du collier, de manière à venir coopérer naturellement en fin de la course de déplacement. En d'autres termes, les deux portions de ceinture se comportent comme des mâchoires, dont la trajectoire est maîtrisée grâce à la présence du pont.

Ainsi, alors que les moyens de serrage restent en place par rapport aux pattes de serrage, les deuxièmes extrémités des portions de ceinture peuvent être assemblées naturellement et sans aucune difficulté, les portions de ceintures étant articulées l'une par rapport à l'autre dans la région du pont.

Le pont est solidairement relié à la première extrémité de chacune des deux portions de ceinture.

Ainsi, l'ensemble constitué par les deux portions de ceinture, leurs pattes de serrage et le pont peut être manipulé comme un tout.

Les deux portions de ceinture et le pont sont formés en une seule pièce.

La ceinture est donc formée en une seule pièce, avec les portions de ceinture et le pont, ce qui réduit le nombre de pièces devant être manipulées pour monter ensemble les différents éléments constitutifs du collier, pour monter ce collier sur un objet devant être serré.

Avantageusement, le pont s'étend entre les pattes de serrage.

Ainsi, le pont s'étend dans la région du collier dans laquelle se trouvent les moyens de serrage. C'est alors dans la région de ces moyens que se situe l'articulation entre les deux mâchoires que forment les deux portions de ceinture. Grâce à cela, les deuxièmes extrémités équipées des organes d'assemblage disposent l'une par rapport à l'autre d'un débattement angulaire important, sans nécessiter que le pont ait lui-même des dimensions importantes. Toute perte de matière est ainsi évitée.

Avantageusement, le pont est formé par au moins une partie de bande plus étroite que les portions de ceinture.

Une telle portion de bande peut facilement être formée en une seule pièce avec les deux portions de ceinture. En tout état de cause, du fait de son étroitesse, cette portion peut aisément voir sa configuration modifiée lors du montage du collier sur l'objet devant être serré et du rapprochement des deuxièmes extrémités des portions de ceinture. En d'autres termes, la présence du pont n'augmente pas notablement les efforts nécessaires au rapprochement des deuxièmes extrémités des portions de ceinture.

Avantageusement, les organes d'assemblage coopèrent entre eux par accrochage.

L'accrochage constitue un système simple d'assemblage des organes d'assemblage qui équipent les deuxièmes extrémités des portions de ceinture. Avec cette conformation, les organes d'assemblage sont formés aisément et à moindre coût. Chaque organe d'assemblage peut être formé en une seule pièce avec la portion de ceinture qu'il équipe, et leur assemblage par accrochage est aisé.

Avantageusement, l'organe d'assemblage de la deuxième extrémité de l'une des portions de ceinture comprend une première oreille en saillie radiale vers l'extérieur présentant une extrémité libre recourbée vers l'intérieur pour former un crochet, tandis que l'organe d'assemblage de la deuxième extrémité de l'autre portion de ceinture comprend une deuxième oreille en saillie radiale vers l'extérieur qui est apte à coopérer avec ledit crochet.

La configuration des organes d'assemblage est alors simple et ceux-ci sont aisés à fabriquer.

Avantageusement, l'organe d'assemblage de la deuxième extrémité de l'une des portions de ceinture est formé sur un prolongement de ladite deuxième extrémité, qui est décalé radialement vers l'extérieur.

Dans ce cas, avantageusement, le prolongement présente un bord interne d'accrochage, et l'organe d'assemblage de la deuxième extrémité de l'autre portion de ceinture comprend un bord d'accrochage apte à s'accrocher sur le bord interne d'accrochage, du côté interne du prolongement.

Ceci constitue une variante avantageuse et simple à fabriquer pour les organes d'assemblage.

L'invention sera bien comprise et ses avantages apparaîtront mieux à la lecture de la description détaillée qui suit, de modes de réalisation représentés à titre d'exemples non limitatifs. La description se réfère aux dessins annexés, sur lesquels :
- la figure 1 montre, en élévation latérale, un collier de serrage conforme à l'invention, serré sur un objet ;
- la figure 2 illustre le montage du collier de la figure 1 sur l'objet ;
- la figure 3 est une vue en perspective montrant la même situation que la figure 2 ;
- la figure 4 montre l'écrou faisant partie des moyens de serrage du collier des figures précédentes ;
- la figure 5 est une vue de dessus, prise selon la flèche V de la figure 2 ;
- la figure 6 montre, en vue schématique en perspective de côté, une variante dans laquelle le pont diffère de celui des figures précédentes ;
- la figure 7 est une vue de côté de la figure 6, prise selon la flèche VII de la figure 6, montrant en outre les moyens de serrage comprenant une vis de serrage et un écrou conforme à celui de la figure 4 ;
- la figure 8 montre, en vue en élévation de côté, un collier de serrage selon un deuxième mode de réalisation, monté sur un objet devant être serré, alors que le collier est fermé sur cet objet, sans être serré ;
- la figure 9 est une vue en perspective, prise selon la flèche IX de la figure 8 ;
- la figure 10 montre, en perspective, le collier des figures 8 et 9 ;
- les figures 11 et 12 montrent, en coupe dans le plan XI-XI de la figure 10, deux variantes pour les organes d'assemblage du collier des figures 8 à 10 ;
- la figure 13 est une vue schématique en élévation de côté, montrant un collier conforme à l'invention, selon un autre mode de réalisation ;
- la figure 14 est une vue en perspective prise par le dessus et de côté, montrant une variante de réalisation pour le collier des figures 1 à 5 à l'état libre, non serré ;
- la figure 15 montre, dans une vue en perspective analogue à celle de la figure 14, le collier de la figure 14 à l'état serré ;
- les figures 16 et 17 montrent, selon deux variantes non revendiquées, les éléments constitutifs du collier, avant leur assemblage ; et
- la figure 18 montre, en perspective, le pont du collier de la figure 17.

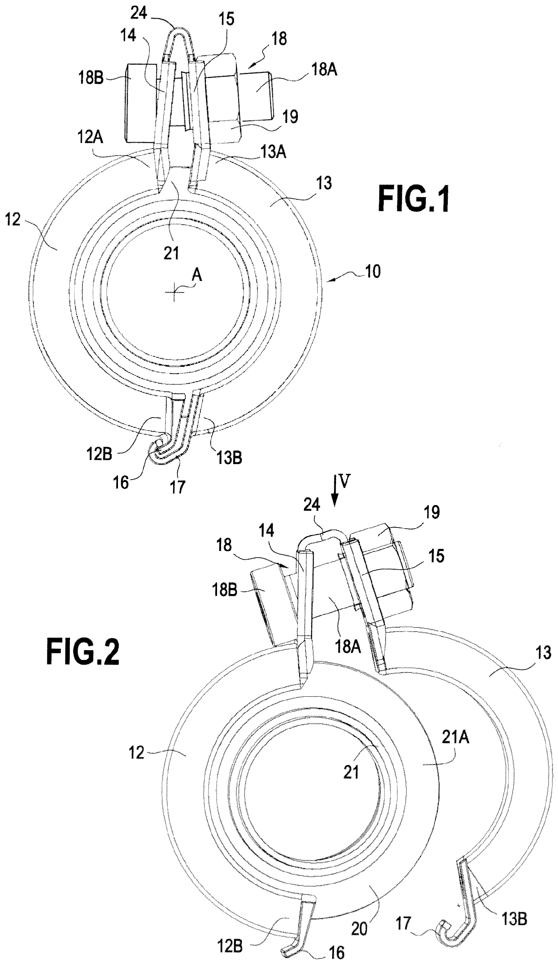

On se réfère tout d'abord au collier des figures 1 à 5. Le collier comporte une ceinture 10 ayant deux portions de ceinture, respectivement 12 et 13. Les premières extrémités, respectivement 12A et 13A de ces portions de ceinture portent chacune une patte de serrage, respectivement 14 et 15. Les deuxièmes extrémités, respectivement 12B et 13B des portions de ceinture portent chacune un organe d'assemblage, respectivement 16 et 17. Le collier comporte des moyens de serrage qui coopèrent avec les pattes de serrage 14 et 15 pour les déplacer l'une par rapport à l'autre de manière à réaliser le serrage du collier. En l'espèce, ces moyens de serrage comprennent une vis 18 dont le fût 18A traverse des perçages, respectivement 14A et 15A des pattes de serrage 14 et 15. La tête 18B de la vis est retenue par rapport à la patte de serrage 14, tandis qu'un écrou 19 est retenu par rapport à la patte de serrage 15. On comprend donc que le vissage de la vis dans l'écrou tend à rapprocher l'une de l'autre les pattes de serrage 14 et 15.

Dans toute la suite, on utilisera le qualificatif « extérieur » pour qualifier un élément du collier qui se trouve vers l'extérieur par rapport à l'axe A du collier. De même, la direction radiale sera définie comme étant la direction qui s'étend radialement par rapport à l'axe A du collier.

Sur les figures 2, 3 et 5, le collier est en cours de montage sur l'objet devant être serré. Cet objet est désigné par la référence 20 et,

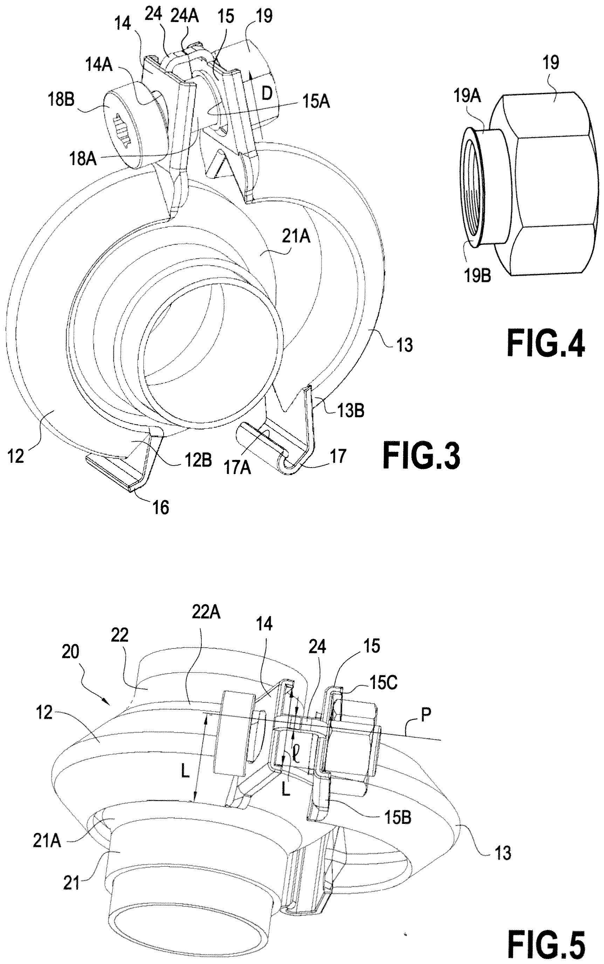

Modifications pour l'entrée en phase EP
comme on le comprend sur la figure 5, il peut par exemple être formé de deux portions de tube 21 et 22 assemblées l'une contre l'autre, les extrémités en regard de ces portions de tube présentant des évasés, respectivement 21A et 22A.

Dans l'exemple représenté, la ceinture présente une section creuse, en particulier en forme de V dont la pointe est tournée radialement vers l'extérieur de la ceinture. On comprend que les évasés 21A et 22A viennent se loger dans cette section creuse, de sorte que le serrage du collier tend à plaquer l'une contre l'autre les extrémités des portions de tube 21 et 22 qui sont en regard et coopèrent entre elles lorsque ces portions sont assemblées.

Bien entendu, il ne s'agit là que d'un exemple d'application de l'invention. Le collier de l'invention pourrait également servir à serrer tout type d'objet, en particulier un tuyau emmanché sur un tube. Le collier pourrait avoir une section creuse, en V telle que précédemment décrite, ou bien en U, ou bien encore une section plate, ou bien, de manière générale, toute section convenable au serrage de l'objet qu'il est destiné à serrer.

Sur les figures 2, 3 et 4, la portion de ceinture 12 est disposée autour d'une portion de l'objet 20 que le collier permet de serrer, tandis que la portion de ceinture 13 en est écartée. En effet, les deux portions de ceinture peuvent s'écarter l'une de l'autre pour délimiter entre elles un espace suffisant pour permettre le montage du collier sur l'objet 20.

Pour terminer le montage du collier à partir de la situation représentée sur les figures 2, 3 et 5, la portion de ceinture 13 est déplacée de telle sorte que sa deuxième extrémité 13B se rapproche de la deuxième extrémité 12B de la portion de ceinture 12, jusqu'à ce que les organes d'assemblage 16, 17 qui équipent ces deux portions d'extrémité viennent s'assembler.

Dans cette situation, le collier est pré-monté, c'est-à-dire qu'il est situé autour de l'objet devant être serré de manière à ceinturer cet objet, mais qu'il n'exerce pas encore de force de serrage significative sur cet objet. Pour que ces forces de serrage soient obtenues, le collier est serré à l'aide des moyens de serrage. Ainsi, à partir d'une situation de pré-montage dans laquelle les deuxièmes extrémités des portions de ceinture sont assemblées, la vis 18 du collier représenté à titre d'exemple sur les figures 1 à 5 est serrée de manière à rapprocher l'une de l'autre les pattes de serrage 14 et 15, provoquant ainsi la réduction du diamètre de la ceinture nécessaire au serrage du collier.

On voit que les premières extrémités 12A et 13A des portions de ceinture 12 et 13 sont reliées par un pont 24. A l'état non serré du collier, comme on le voit par exemple sur la figure 2, ce pont permet de maintenir un écartement entre les pattes de serrage 14 et 15, tout en les reliant entre elles de manière qu'elles soient tenues l'une par rapport à l'autre. Le pont 24 forme ainsi une zone d'articulation entre les deux portions de ceinture, permettant de rapprocher l'une de l'autre leurs deuxièmes extrémités respectives, de manière à faire coopérer les organes d'assemblage. Le pont s'étend globalement selon la direction périphérique de la ceinture, perpendiculairement à l'axe A du collier.

Lors du serrage du collier, le pont change de configuration et l'on voit sur la figure 1 qu'il s'est déformé de manière à former une boucle en U dépassant radialement vers l'extérieur, la base du U étant située du côté extérieur. Bien entendu, le pont pourrait se déformer d'une autre manière. L'important est que ce pont soit apte à changer de configuration sous des efforts peu significatifs, de manière à ne pas nuire au déplacement relatif des pattes de serrage, nécessaire au serrage du collier.

Ainsi, dans le cas représenté sur la figure 1, le pont 24 est flexible (c'est-à-dire qu'il présente une flexibilité très supérieure à celle des portions de ceinture) et peut donc être déformé sous l'effet de l'effort de serrage. On pourrait également concevoir que ce pont soit conformé de manière à se rompre sous l'effet du déplacement des oreilles qui s'opère lors du serrage du collier. Il pourrait, dans un premier temps, se déformer, par exemple en formant une boucle s'étendant radialement vers l'extérieur, jusqu'à ce que se casser en laissant deux bras, respectivement attachés à chacune des deux portions de ceinture.

Dans l'exemple représenté, le pont 24 est solidairement relié aux deux portions de ceinture, et est même formé en une seule pièce avec elles. En particulier, l'ensemble constitué par les portions de ceinture, avec les pattes de serrage et le pont, et avec les organes d'assemblage, peut être formé en une seule pièce à partir d'un flan, découpé et subissant des opérations d'emboutissage et/ou de pliage et des opérations d'enroulement, pour former l'ensemble précité.

Dans les exemples représentés, le pont s'étend entre les pattes de serrage 14 et 15. Sur les figures 1 à 5, le pont est relié aux extrémités radiales externes des pattes de serrage 14 et 15. Il est formé par une partie de bande plus étroite que les portions de ceinture. En particulier, comme on le voit sur la figure 4, les portions de ceinture et les pattes de serrage ont une largeur L très supérieure à la largeur ℓ de la bande qui forme le pont 24, ces largeurs étant mesurées selon l'axe A du collier. Par exemple, cette largeur ℓ peut être de l'ordre de un quart à un dixième de la largeur L.

En l'espèce, la ceinture et le pont sont symétriques par rapport à un plan P perpendiculaire à l'axe A du collier. Le fait que le pont 24 soit ainsi centré sur ce plan permet de favoriser l'alignement des deuxièmes extrémités des portions de ceinture dans ce plan et d'éviter leurs décalages relatifs dans la direction de l'axe A du collier.

On pourrait prévoir qu'à la place d'une seule bande, le pont soit formé par une pluralité de bandes, en particulier deux bandes sensiblement analogues à la bande 24 mais éventuellement plus étroites, de préférence situées symétriquement par rapport au plan P.

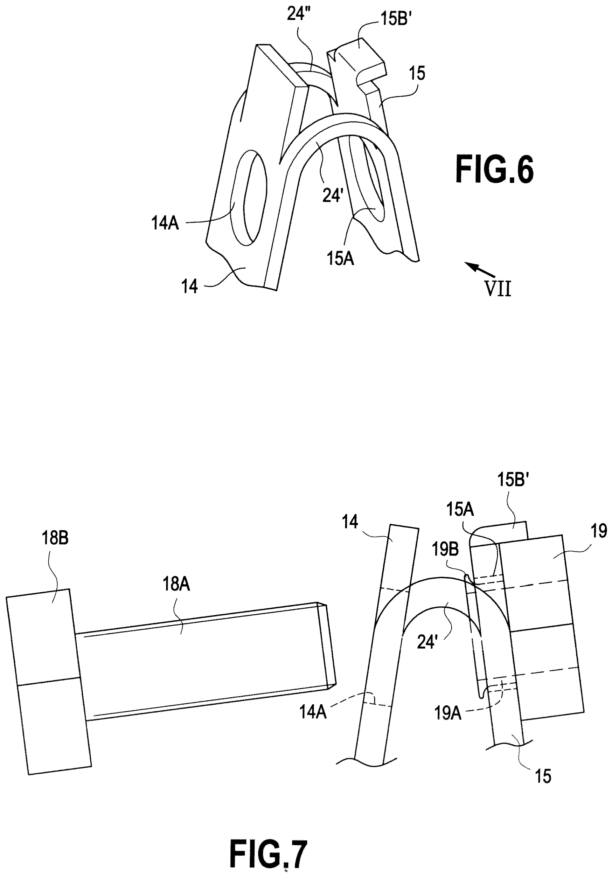

Sur la figure 6, on a illustré de manière schématique une variante de réalisation pour le pont. On a donc seulement représenté les pattes de serrage 14 et 15 avec leurs perçages 14A et 15A à travers lesquels peut passer le fût de la vis. Dans cet exemple, le pont est formé par deux parties de bande 24' et 24" qui s'étendent chacune entre les deux pattes de serrage 14 et 15, en étant reliées aux côtés de ces pattes. Ces deux bandes sont solidairement reliées aux pattes de serrage et sont formées en une seule pièce avec les deux portions de ceinture.

Dans l'exemple des figures 1 à 7, les moyens de serrage comprennent la vis 18 et l'écrou 19. En l'espèce, cet écrou est calé en rotation par rapport à la patte de serrage 15.

Ainsi, sur les figures 1 à 5, la patte de serrage 15 présente deux portions de joues latérales 15B et 15C, qui s'étendent à l'opposée de la patte de serrage 14, et contre lesquelles viennent se caler deux facettes opposées de l'écrou 19. Ces portions de joue servent également à rigidifier la patte de serrage 15 et, d'ailleurs, la patte de serrage 14 comporte également deux portions de joue qui servent à sa rigidification.

Comme on le voit mieux sur la figure 4, cet écrou 19 comporte un collet 19A qui passe à travers le perçage 15A de la patte de serrage 15. Après l'insertion de ce collet dans ce perçage, le bord libre du collet peut être repoussé pour former un bourrelet radial 19B permettant ainsi de retenir l'écrou en place dans ce perçage.

Compte tenu du fait que, lors du serrage, les portions de ceinture et donc les pattes de serrage bougent les unes par rapport aux autres, l'écrou 19 est monté lâche dans le perçage 15A. On voit en effet que le diamètre de ce perçage est supérieur au diamètre externe du collet 19. Le débattement de la vis par rapport aux pattes de serrage qui est nécessaire aux déplacements des portions de ceinture s'opérant essentiellement dans le plan P, ce perçage peut être oblong en étant allongé dans la direction D de la hauteur de la patte. En tout état de cause, on prévoit avantageusement que le perçage 14A ou 15A d'au moins l'une des pattes de serrage 14 et 15 soit oblong pour permettre un tel débattement.

Dans l'exemple des figures 6 et 7, c'est également le perçage 15A qui est oblong. On voit par ailleurs que l'extrémité radiale externe de la patte de serrage 15 présente un rabat 15B' qui s'étend du côté de cette patte 15 opposée à la patte 14. Comme on le voit mieux sur la figure 7, ce rabat sert à caler l'écrou 19 en rotation, une des facettes de l'écrou étant calée contre le rabat.

Dans l'exemple représenté sur les figures 1 à 6, les organes d'assemblage 16 et 17 coopèrent entre eux par accrochage. On voit en effet que l'organe d'accrochage 17 est formé par une première oreille en saillie radiale vers l'extérieur à l'extrémité 13B de la portion de ceinture 13, cette première oreille présentant une extrémité libre 17A qui est recourbée vers l'intérieur pour former un crochet. De son côté, l'organe d'assemblage 16 de l'extrémité 12B de la portion de ceinture 12 comprend une deuxième oreille en saillie radiale vers l'extérieur. On comprend que cette deuxième oreille vient s'accrocher sous l'extrémité libre recourbée 17A de l'oreille 17. En l'occurrence, pour favoriser l'accrochage, la deuxième oreille 16 et la portion recourbée de la première oreille sont inclinées par rapport à la direction radiale, dans le sens allant de la première oreille 17 vers la deuxième oreille 16.

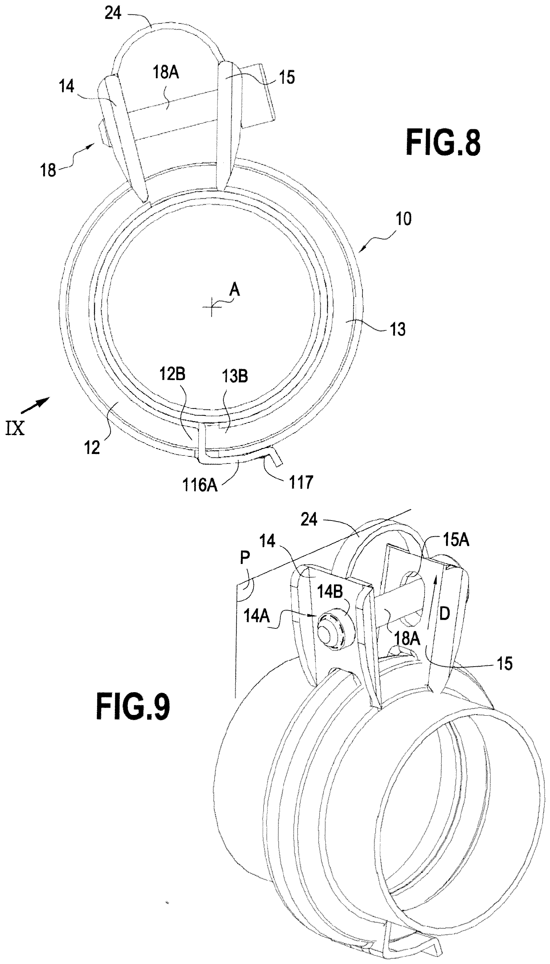

On décrit maintenant les figures 8 à 12. En se reportant d'abord aux figures 8 et 9, on voit que le collier représenté a une structure analogue à celle du collier précédemment décrit, en particulier en ce qu'il comporte une ceinture 10 avec deux portions de ceinture 12 et 13 aux premières extrémités desquelles sont redressées des pattes de serrage 14 et 15 et aux deuxièmes extrémités desquelles sont prévus des organes d'assemblage, respectivement 116 et 117.

De plus, le pont 24 relie les pattes de serrage 14 et 15. Les moyens de serrage comprennent la vis 18 dont le fût 18A traverse des perçages 14A et 15A des pattes de serrage 14 et 15.

Une première différence entre ce collier et celui qui a été précédemment décrit réside dans le fait que le perçage de l'une des pattes de serrage présente un collet taraudé pour coopérer par vissage avec le fût 18A de la vis. En l'espèce, la patte de serrage 14 présente un tel collet 14B qui est formé par repoussement de la matière de bord du perçage 14A et qui est fileté pour coopérer par vissage avec le fût de la vis. Il n'est donc pas nécessaire d'utiliser un écrou séparé. Ce collet 14B s'étend en l'espèce sous la forme d'un élément cylindrique du côté de la patte de serrage 14 opposée à la patte de serrage 15. Ainsi, le fût de la vis est ajusté dans le perçage 14A. En revanche, le fût de la vis est monté lâche dans le perçage 15A de la patte de serrage 15. On voit que celui-ci est oblong en ayant les dimensions diamétrales supérieures dans la direction D de la hauteur de la patte de serrage 15, qui correspond sensiblement à la direction radiale par rapport à l'axe A du collier, de manière à permettre un débattement du fût de la vis dans ce perçage tout en maintenant ce fût sensiblement dans le plan médian P du collier perpendiculaire à l'axe A.

On voit par ailleurs que, comme les pattes de serrage 14 et 15 du mode de réalisation des figures précédentes, celles du mode de réalisation des figures 8 à 10 présentent des joues de renfort. En l'occurrence, ces joues s'étendent, pour chacune des pattes, du côté opposé à l'autre patte.

Une autre différence entre ce collier et celui du mode de réalisation précédent réside dans la conformation des organes d'assemblage. En effet, l'organe d'assemblage 116 de la deuxième extrémité 12B de la portion de ceinture 12 est formé sur un prolongement 116A de cette deuxième extrémité qui est décalé radialement vers l'extérieur.

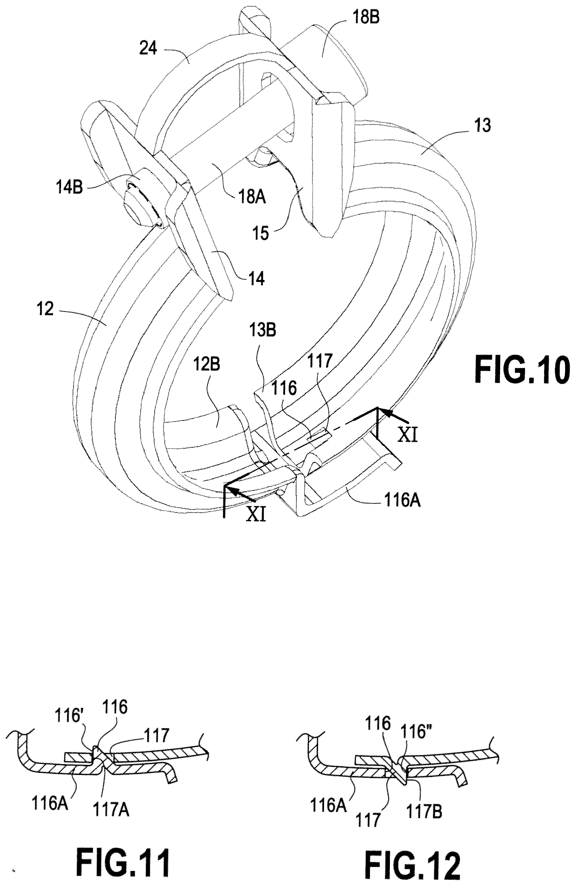

Par exemple, comme on le voit sur la figure 11, cet organe d'assemblage 116 peut être formé par un bossage faisant saillie du côté interne du prolongement 116A, pour former un relief d'accrochage. En variante, comme représenté sur la figure 12, l'organe d'accrochage 116 peut être formé par une découpe dans le prolongement 116A.

Quoi qu'il en soit, l'organe d'accrochage présente un bord interne d'accrochage, qu'il s'agisse de la face 116' du bossage 116 représenté sur la figure 11, ou bien du bord 116" de l'organe d'accrochage 116 en découpe, tel que représenté sur la figure 12.

De son côté, l'organe d'assemblage de la deuxième extrémité 13B de la portion de ceinture 13 comporte un bord d'accrochage 117 qui s'accroche sur ce bord interne d'accrochage. Dans l'exemple de la figure 11, l'organe d'accrochage de l'extrémité 13B de la portion de ceinture 13 est formé par une ouverture 117 de cette deuxième extrémité, et son bord d'accrochage 117A est formé par l'un des bords de cette ouverture. Dans l'exemple de la figure 12, l'organe d'accrochage 117 est formé par une saillie radiale d'un bossage réalisé vers l'extérieur dans la deuxième extrémité 13B de la portion de ceinture 13, dont un bord en relief 117B s'accroche contre le bord 116" de la fenêtre 116. On vient de relever qu'en lieu et place des bossages 116 de la figure 11 ou 117 de la figure 12, on pourrait prévoir des crevés ou des pattes relevées, respectivement vers l'intérieur et vers l'extérieur.

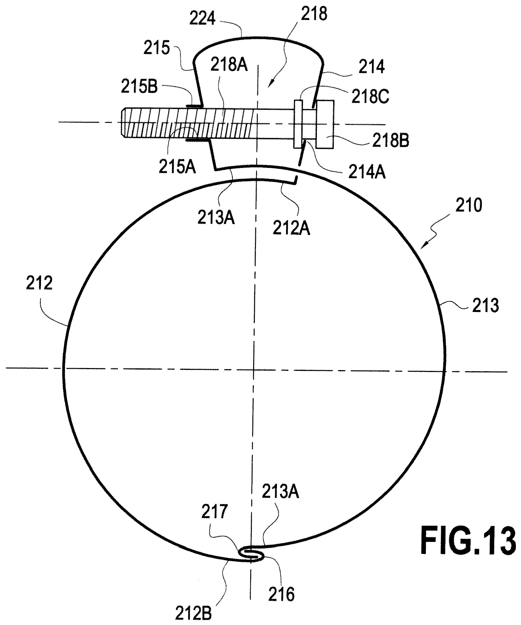

Dans les exemples qui viennent d'être décrits, le collier est serré par un rapprochement de ces pattes de serrage et la ceinture forme un ensemble enroulé sur légèrement moins de 360°. En variante, on pourrait concevoir que la ceinture s'étende sur plus de 360°, par exemple pour former un collier du type représenté sur la figure 13 dans lequel le serrage s'opère en écartant l'une de l'autre les pattes de serrage, auquel cas le pont peut initialement former une boucle qui s'aplatit ou qui se casse lors du serrage.

Ainsi, sur la figure 13, la ceinture 210 comprend deux portions de ceinture, respectivement 212, 213 qui, considérées ensemble, s'enroulent sur plus de 360° lorsque le collier est fermé. A leurs premières extrémités, respectivement 212A et 213A, ces portions de ceinture présentent des pattes de serrage, respectivement 214 et 215 qui sont redressées sensiblement radialement vers l'extérieur. Un pont 224 relie entre elles les premières extrémités des portions de ceinture 212 à 213. En l'espèce, comme dans les exemples précédemment décrits, ce pont 224 s'étend aux extrémités radiales externes des pattes de serrage 214 et 215. A leurs deuxièmes extrémités respectives, respectivement 213B et 212B, les portions de ceinture présentent des organes d'assemblage constitués en l'espèce par des crochets, respectivement 216 et 217 qui sont recourbés de manière à venir s'accrocher entre eux.

Les moyens de serrage comprennent en l'espèce une vis 218 dont le fût 218A traverse des perçages, respectivement 214A et 215A des pattes de serrage 214 et 215. Une fois que les organes d'assemblage sont assemblés entre eux, en l'occurrence par accrochage, le collier peut être serré par rotation de la vis 218. En l'occurrence, cette rotation s'effectue dans le sens d'un dévissage puisque le serrage, obtenu par une réduction du diamètre du collier, nécessite que les pattes de serrage 214 et 215 soient davantage écartées l'une de l'autre.

En l'occurrence, la tête de la vis 218B est retenue par rapport à la patte de serrage 214 tout en pouvant tourner par rapport à elle. Pour ce faire, du côté de cette patte opposé à la tête, la vis porte un renflement radial 218C par exemple réalisé sous la forme d'un circlips monté sur le fût de la vis après son engagement dans le perçage 214A. Du côté de la patte de serrage 215, le fût de la vis coopère avec un filetage. Il pourrait s'agir d'un écrou rapporté mais, en l'espèce, ce filetage est réalisé dans un collet 215B formant un prolongement cylindrique du bord du perçage 215A. On comprend que lorsque la vis est entraînée en rotation dans le sens d'un dévissage, sa tête reste retenue par rapport à la patte de serrage 214, tandis que son fût se dévisse par rapport au filetage du collet 215B, tendant ainsi à éloigner la patte de serrage 215 et la patte de serrage 214.

Bien entendu, la figure 13 n'est donnée qu'à titre indicatif d'un mode de réalisation possible. En particulier, on pourrait prévoir que les moyens d'assemblage 216 et 217 soient modifiés dans un sens conforme à ceux précédemment décrits en référence aux figures précédentes.

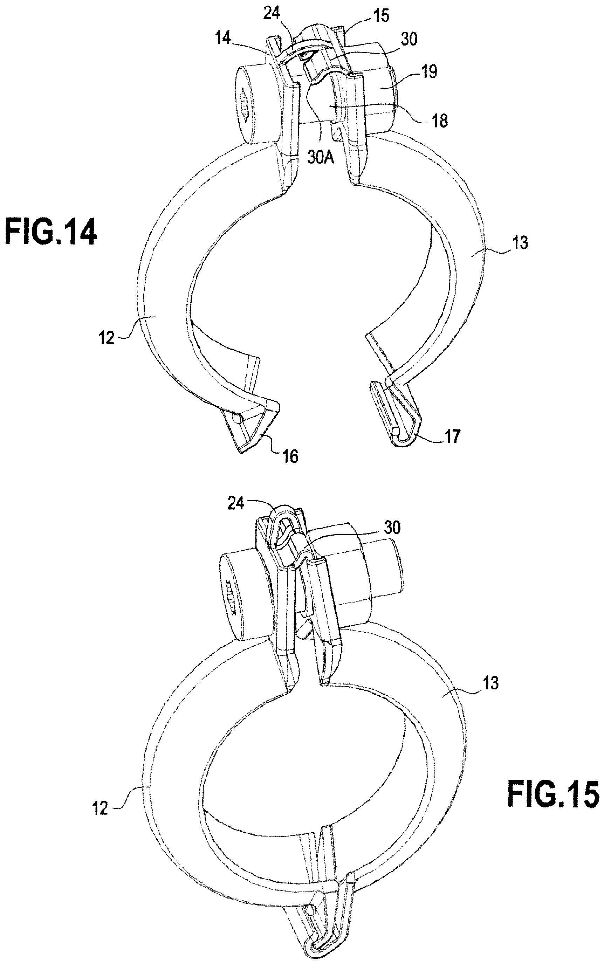

On décrit maintenant les figures 14 et 15 qui montrent une variante du mode de réalisation des figures 1 à 5. Dans cet exemple, le collier est conforme en tout point à celui qui a été décrit en référence aux figures 1 à 5, à ceci près qu'il est équipé d'une butée délimitant l'espacement minimum des pattes de serrage en position serrée du collier. En l'occurrence, cette butée est formée par un repli 30 ménagé à l'extrémité radiale externe de la patte de serrage 15 et s'étendant vers la patte de serrage 14.

La figure 14 montre ce collier à l'état ouvert, alors que le repli 30 est à l'état libre. La figure 15 montre le même collier à l'état fermé, et l'on voit que l'extrémité libre 30A du repli 30 est venue en butée contre la face interne de la patte de serrage 14 (c'est-à-dire la face de cette patte qui est dirigée vers la patte de serrage 15). On comprend également que la butée 30 est déformable, puisqu'on voit qu'elle s'est écrasée dans le sens périphérique lors du serrage du collier. Elle constitue une forme de ressort qui, une fois déformée, maintient un espacement minimum entre les pattes de serrage 14 et 15. Par ailleurs, cette butée peut servir de témoin de fin de serrage puisque, une fois que son extrémité libre 30A est venue en contact contre la face interne de la patte de serrage 14, les contraintes qu'elle exerce sur ces pattes rendent nécessaires un couple de serrage plus élevé.

Le collier des figures 14 et 15 présente également le pont 24 qui, comme celui des figures 3 à 5, est formé à l'extrémité radiale externe des pattes de serrage. Ainsi, le repli qui forme la butée 30 peut être formé par deux languettes s'étendant de part et d'autre du pont 24 à partir de l'extrémité radiale externe de la patte de serrage 15. On voit que la butée 30 a la forme d'une ondulation dont l'extrémité libre de butée est ramenée dans une direction sensiblement circonférentielle du collier. Cette ondulation détermine le sens de déformation de la butée en fin de serrage. De même, le pont 24 est initialement ondulé dans la direction souhaitée, ce qui prédétermine le sens de déformation de ce pont.

On a indiqué précédemment que le pont peut être sécable. Si l'on souhaite favoriser cette fonctionnalité, on peut équiper le pont d'une ligne de faiblesse 24A (voir figure 3) déterminant la zone dans laquelle il est rompu en fin de serrage. Cette zone de faiblesse peut également matérialiser l'axe d'articulation de la zone d'articulation que forme le pont.

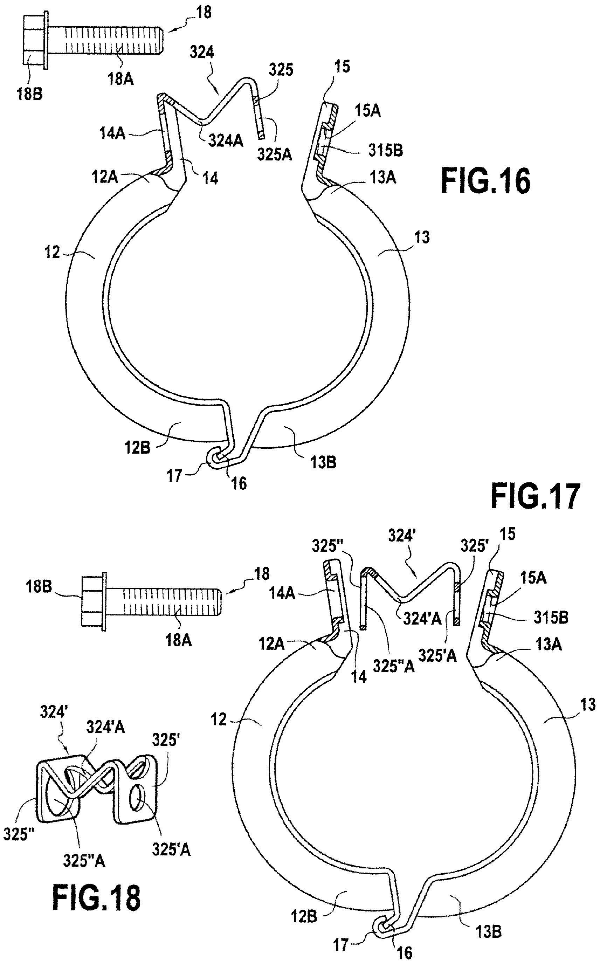

On décrit maintenant la figure 16. Dans cette variante de réalisation, le pont 324 est solidairement fixé à la première extrémité 12A de la portion de ceinture 12. Plus précisément, ce pont est fixé à la première patte de serrage 14. Il peut venir d'une seule pièce avec la première portion de ceinture 12 ou être rapporté sur la première patte. Du côté opposé à la patte de serrage 14, le pont 324 présente une patte de fixation 325 dans laquelle est ménagé un perçage 325A. Ainsi, on assemble les deux portions de ceinture 12 et 13 en mettant le perçage 325A de cette patte 325 en registre avec le perçage 15A de la patte de serrage 15 de la deuxième portion de ceinture 13. Il suffit ensuite d'insérer le fût 18A de la vis 18 à travers le perçage 14A de la patte 14, et à travers les perçages 325A et 15A en registre. Dans l'exemple représenté, la patte de serrage 15 est solidaire d'un collet fileté 315B. En l'espèce ce collet fait saillie du côté interne de la patte 15, entre ses joues latérales. Le diamètre du perçage 325A est adapté au diamètre externe de ce collet, de telle sorte que ce collet est inséré dans le perçage 325A lorsque les perçages 325A et 15A sont mis en registre. En l'espèce, le pont 324 présente une forme en V, la pointe 324A étant dirigée vers l'intérieur du collier. Cette pointe 324A forme ainsi un pli qui s'étend parallèlement à l'axe du collier et qui matérialise l'axe de l'articulation que forme le pont 24. Une fois les perçages 325A et 15A mis en registre, et une fois la vis 18 mise en place dans les perçages 14A, 325A et 15A, elle peut être simplement prévissée dans le collet 15B. Le collier peut alors être mis en place autour de l'objet à serrer, et les deuxièmes extrémités des portions de ceinture 12B et 13B peuvent être accrochées par leurs moyens d'accrochage 16 et 17.

Sur la figure 17, le pont 324' est un élément distinct des portions de ceinture 12 et 13. Il comporte d'une part une patte 325' analogue à la patte 325 décrite en référence à la figure 16, et pourvue comme elle d'un perçage 325'A. Pour sa fixation à la patte de serrage 14, le pont 324' présente d'autre part une patte de fixation 325", pourvue d'un perçage 325"A. Pour assembler le collier, on dispose le pont de telle sorte que les perçages 325'A et 325"A viennent respectivement en registre avec les perçages 14A et 15A des pattes de serrage 14 et 15. On insère ensuite la vis dans ces perçages. Comme dans le cas précédent, le perçage 15A de la patte de serrage 15 peut être équipé d'un collet. Le perçage 14A de la patte 14 est quant à lui avantageusement ovalisé, de même que le perçage 325"A de la patte 325". Les deuxièmes extrémités 12B et 13B des portions de ceinture 12 et 13 sont pourvues des moyens d'assemblage par accrochage 16 et 17 précédemment décrits.

Sur les figures 16 et 17, les pattes de fixation 325, 325' et 325" sont orientées de manière à se trouver parallèles aux pattes de serrage 14 et 15 lorsque le pont est assemblé avec les portions de ceinture. Par ailleurs, dans l'exemple représenté, la ou les pattes de fixation du pont sont disposées du côté interne des pattes de serrage 14 et 15. On pourrait bien entendu prévoir de les disposer du côté externe, mais la disposition interne est préférentielle. Les ponts 324 et 324' présentent une fente longitudinale, respectivement 324A, 324'A, c'est-à-dire s'étendant dans la direction allant d'une patte de serrage à l'autre. Comme on le voit mieux sur la figure 18, cette fente s'étend au moins dans la base du V que forme le pont pour, lorsque ce pont se replie sous l'effet du serrage du collier, éviter que la vis 18 ne fasse obstacle à cette déformation du pont.

## Revendications

1. Collier de serrage comprenant une ceinture (10) ayant deux portions de ceinture (12, 13) présentant chacune une première extrémité (12A, 13A) munie d'une patte de serrage (14, 15) et une deuxième extrémité (12B, 13B) munie d'un organe d'assemblage (16, 17), les organes d'assemblage étant aptes à coopérer entre eux pour assembler lesdites deuxièmes extrémités de manière amovible, le collier comportant en outre des moyens de serrage (18, 19) aptes à coopérer avec les pattes de serrage (14, 15) pour déplacer ces pattes l'une par rapport à l'autre alors que les deuxièmes extrémités (12B, 13B) sont assemblées, de manière à serrer le collier, et un pont (24 ; 24', 24" ; 224), qui, à l'état libre non serré du collier, maintient les pattes de serrage (14, 15) l'une par rapport à l'autre et permet le rapprochement des deuxièmes extrémités (12B, 13B) des portions de ceinture (12, 13) jusqu'à faire coopérer entre eux les organes d'assemblage (16, 17) alors que les moyens de serrage (18) sont en place par rapport aux pattes de serrage, la configuration de ce pont étant modifiée lors du serrage du collier pour permettre le déplacement des pattes de serrage l'une par rapport à l'autre,
**caractérisé en ce que** le pont (24 ; 24', 24" ; 224) relie les premières extrémités (12A,13A) des deux portions de ceinture (12,13) en étant solidairement relié à la première extrémité de chacune des deux portions de ceinture (12, 13), les deux portions de ceinture (12, 13) et le pont (24 ; 24', 24" ; 224) étant formés en une seule pièce.

2. Collier de serrage selon la revendication 1, **caractérisé en ce que** le pont (24 ; 24', 24" ; 224) s'étend entre les pattes de serrage (14, 15).

3. Collier de serrage selon la revendication 1 ou 2, **caractérisé en ce que**, lors du serrage, le pont (24 ; 24', 24" ; 224) est apte à être déformé sous l'effet de l'effort de serrage.

4. Collier de serrage selon l'une quelconque des revendications 1 à 3, **caractérisé en ce que** le pont (24 ; 24' ; 24" ; 224) forme une zone d'articulation entre les deux portions de ceinture.

5. Collier de serrage selon l'une quelconque des revendications 1 à 4, **caractérisé en ce que** le pont (24 ; 24', 24" ; 224) est apte à se rompre sous l'effet du déplacement des pattes des serrage (14,15) lors du serrage du collier.

6. Collier de serrage selon l'une quelconque des revendications 1 à 5, **caractérisé en ce que** le pont (24 ; 24', 24" ; 224) est formé par au moins une partie de bande plus étroite que les portions de ceinture (12, 13).

7. Collier de serrage selon l'une quelconque des revendications 1 à 6, **caractérisé en ce que** les pattes de serrage (14, 15) présentent chacune un perçage (14A, 15A) et les moyens de serrage comprennent une vis (18), dont le fût (18A) traverse ces perçages et qui est retenue par rapport aux pattes (14, 15) pour provoquer leur déplacement relatif par vissage

8. Collier de serrage selon la revendication 7, **caractérisé en ce que** le perçage (14A, 15A) d'au moins l'une des pattes de serrage (14, 15) est oblong.

9. Collier de serrage selon la revendication 7 ou 8, **caractérisé en ce que** le perçage de l'une des pattes de serrage (14, 15) présente un collet taraudé (14B) pour coopérer par vissage avec le fût (18A) de la vis.

10. Collier de serrage selon l'une quelconque des revendications 1 à 9, **caractérisé en ce que** les organes d'assemblage (16, 17) coopèrent entre eux par accrochage.

11. Collier de serrage selon la revendication 10, **caractérisé en ce que** l'organe d'assemblage de la deuxième extrémité de l'une des portions de ceinture (12, 13) comprend une première oreille (17) en saillie radiale vers l'extérieur présentant une extrémité libre (17A) recourbée vers l'intérieur pour former un crochet, tandis que l'organe d'assemblage de la deuxième extrémité de l'autre portion de ceinture comprend une deuxième oreille (16) en saillie radiale vers l'extérieur qui est apte à coopérer avec ledit crochet.

12. Collier de serrage selon la revendication 10, **caractérisé en ce que** l'organe d'assemblage (116) de la deuxième extrémité (12B) de l'une des portions de ceinture (12) est formé sur un prolongement (116A) de ladite deuxième extrémité, qui est décalé radialement vers l'extérieur.

13. Collier de serrage selon la revendication 12, **caractérisé en ce que** le prolongement (116A) présente un bord interne d'accrochage (116', 116"), et **en ce que** l'organe d'assemblage (117) de la deuxième extrémité de l'autre portion de ceinture comprend un bord d'accrochage apte à s'accrocher sur le bord interne d'accrochage, du côté interne du prolongement.

14. Collier de serrage selon l'une quelconque des revendications 1 à 13, **caractérisé en ce qu'**il comporte une butée (30) entre les pattes de serrage (14, 15) définissant leur espacement minimum à l'état serré du collier.

## Patentansprüche

1. Klemmschelle, umfassend einen Ring (10) mit zwei Ringabschnitten (12, 13), die jeweils ein erstes Ende (12A, 13A), welches mit einer Klemmlasche (14, 15) versehen ist, und ein zweites Ende (12B, 13B), welches mit einem Verbindungsorgan (16, 17) versehen ist, aufweisen, wobei die Verbindungsorgane geeignet sind, miteinander zusammenzuwirken, um die zweiten Enden lösbar zu verbinden, wobei die Schelle ferner Klemmmittel (18, 19) umfasst, die geeignet sind, mit den Klemmlaschen (14, 15) zusammenzuwirken, um diese Laschen zueinander zu bewegen, während die zweiten Enden (12B, 13B) verbunden sind, um die Schelle festzuziehen, sowie eine Brücke (24; 24', 24"; 224), die im freien, nicht festgezogenen Zustand der Schelle die Klemmlaschen (14, 15) zueinander hält und das Annähern der zweiten Enden (12B, 13B) der Ringabschnitte (12, 13) soweit ermöglicht, bis sie die Verbindungsorgane (16, 17) zusammenwirken lässt, während die Klemmmittel (18) gegenüber den Klemmlaschen angebracht sind, wobei die Gestalt dieser Brücke beim Festziehen der Schelle verändert wird, um die Bewegung der Klemmlaschen zueinander zu ermöglichen,
**dadurch gekennzeichnet, dass** die Brücke (24; 24', 24"; 224) die ersten Enden (12A, 13A) der beiden Ringabschnitte (12, 13) dadurch verbindet, dass sie mit dem ersten Ende eines jeden der beiden Ringabschnitte (12, 13) fest verbunden ist, wobei die beiden Ringabschnitte (12, 13) und die Brücke (24; 24', 24"; 224) einstückig ausgebildet sind.

2. Klemmschelle nach Anspruch 1, **dadurch gekennzeichnet, dass** die Brücke (24; 24', 24"; 224) sich zwischen den Klemmlaschen (14, 15) erstreckt.

3. Klemmschelle nach Anspruch 1 oder 2, **dadurch gekennzeichnet, dass** die Brücke (24; 24', 24"; 224) beim Festziehen geeignet ist, unter der Wirkung der Klemmkraft verformt zu werden.

4. Klemmschelle nach einem der Ansprüche 1 bis 3, **dadurch gekennzeichnet, dass** die Brücke (24; 24', 24"; 224) einen Gelenkbereich zwischen den beiden Ringabschnitten bildet.

5. Klemmschelle nach einem der Ansprüche 1 bis 4, **dadurch gekennzeichnet, dass** die Brücke (24; 24', 24"; 224) geeignet ist, unter der Wirkung der Bewegung der Klemmlaschen (14, 15) beim Festziehen der Schelle zu brechen.

6. Klemmschelle nach einem der Ansprüche 1 bis 5, **dadurch gekennzeichnet, dass** die Brücke (24; 24', 24"; 224) durch wenigstens einen schmaleren Bandteil als die Ringabschnitte (12, 13) gebildet ist.

7. Klemmschelle nach einem der Ansprüche 1 bis 6, **dadurch gekennzeichnet, dass** die Klemmlaschen (14, 15) jeweils eine Bohrung (14A, 15A) aufweisen und die Klemmmittel eine Schraube (18) umfassen, deren Schaft (18A) diese Bohrungen durchgreift und der gegenüber den Laschen (14, 15) gehalten ist, um deren Relativbewegung durch Schrauben zu bewirken.

8. Klemmschelle nach Anspruch 7, **dadurch gekennzeichnet, dass** die Bohrung (14A, 15A) von wenigstens einer der Klemmlaschen (14, 15) länglich ist.

9. Klemmschelle nach Anspruch 7 oder 8, **dadurch gekennzeichnet, dass** die Bohrung von einer der Klemmlaschen (14, 15) einen innengewindeten Kragen (14B) aufweist, um mit dem Schaft (18A) der Schraube schraubend zusammenzuwirken.

10. Klemmschelle nach einem der Ansprüche 1 bis 9, **dadurch gekennzeichnet, dass** die Verbindungsorgane (16, 17) durch Einhaken miteinander zusammenwirken.

11. Klemmschelle nach Anspruch 10, **dadurch gekennzeichnet, dass** das Verbindungsorgan des zweiten Endes von einem der Ringabschnitte (12, 13) einen radial nach außen vorspringenden ersten Flügel (17) aufweist, der ein nach innen umgebogenes freies Ende (17A) aufweist, um einen Haken zu bilden, während das Verbindungsorgan des zweiten Endes des anderen Ringabschnitts einen radial nach außen vorspringenden zweiten Flügel (16) umfasst, der geeignet ist, mit dem Haken zusammenzuwirken.

12. Klemmschelle nach Anspruch 10, **dadurch gekennzeichnet, dass** das Verbindungsorgan (116) des zweiten Endes (12B) von einem der Ringabschnitte (12) an einer Verlängerung (116A) des zweiten Endes, die radial nach außen versetzt ist, ausgebildet ist.

13. Klemmschelle nach Anspruch 12, **dadurch gekennzeichnet, dass** die Verlängerung (116A) einen inneren Einhakrand (116', 116") aufweist und dass das Verbindungsorgan (117) des zweiten Endes des anderen Ringabschnitts einen Einhakrand umfasst, der geeignet ist, sich an dem inneren Einhakrand auf der Innenseite der Verlängerung zu verhaken.

14. Klemmschelle nach einem der Ansprüche 1 bis 13, **dadurch gekennzeichnet, dass** sie einen Anschlag (30) zwischen den Klemmlaschen (14, 15) umfasst, der ihren Mindestabstand im festgezogenen Zustand der Schelle definiert.

## Claims

1. A clamping collar comprising a belt (10) made up of two belt portions (12, 13), each of which has a first end (12A, 13A) provided with a tightening tab (14, 15) and a second end (12B, 13B) provided with an assembly member (16, 17), the assembly members being suitable for co-operating with each other so as to assemble said second ends together in releasable manner, the collar further comprising tightening means (18, 19) suitable for co-operating with the tightening tabs (14, 15) so as to move said tabs relative to each other once the second ends (12B, 13B) are assembled together, in such a manner as to tighten the collar, and a bridge (24; 24', 24"; 224) that, when the collar is in the free, non-tightened state, holds the tightening tabs (14, 15) relative to each other and makes it possible for the second ends (12B, 13B) of the belt portions (12, 13) to be brought closer together until the assembly members (16, 17) co-operate with each other, once the tightening means (18, 19) are in place relative to the tightening tabs, the configuration of said bridge being modified while the collar is being tightened so as to enable the tightening tabs to move relative to each other,
**characterized in that** the bridge (24; 24', 24"; 224) interconnects the first ends (12A, 13A) of the two belt portions (12, 13) in being integral with the first end of each of the two belt portions (12, 13), the two belt portions (12, 13) and the bridge (24; 24', 24"; 224) being formed in one piece.

2. A clamping collar according to claim 1, **characterized in that** the bridge (24; 24', 24"; 224) extends between the tightening tabs (14, 15).

3. A clamping collar according to claim 1 or 2, **characterized in that**, during tightening, the bridge (24; 24', 24"; 224) is suitable for being deformed under the effect of the tightening force.

4. A clamping collar according to any one of claims 1 to 3, **characterized in that** the bridge (24; 24', 24"; 224) forms a hinge zone between the two belt portions.

5. A clamping collar according to any one of claims 1 to 4, **characterized in that** the bridge (24; 24', 24"; 224) is suitable for breaking under the effect of the tightening tabs (14, 15) moving while the collar is being tightened.

6. A clamping collar according to any one of claims 1 to 5, **characterized in that** the bridge (24; 24', 24"; 224) is formed by at least one strip portion that is narrower than the belt portions (12, 13).

7. A clamping collar according to any one of claims 1 to 6, **characterized in that** each of the tightening tabs (14, 15) is provided with a hole (14A, 15A) and the tightening means comprise a bolt (18), of which the shank (18A) passes through these holes and which is retained relative to the tightening tabs (14, 15) so as to cause them to move relative to each other by screw-engagement.

8. A clamping collar according to claim 7, **characterized in that** the hole (14A, 15A) in at least one of the tightening tabs (14, 15) is oblong.

9. A collar according to claim 7 or 8, **characterized in that** the hole in one of the tightening tabs (14, 15) has a tapped projecting bushing (14B) for co-operating by screw-engagement with the shank (18A) of the bolt.

10. A clamping collar according to any one of claims 1 to 9, **characterized in that** the assembly members (16, 17) co-operate with each other by hooking.

11. A clamping collar according to claim 10, **characterized in that** the assembly member of the second end of one of the belt portions (12, 13) comprises a first lug (17) projecting radially outwards and having a free end (17A) curved back inwards to form a hook, while the assembly member of the second end of the other belt portion comprises a second lug (16) projecting radially outwards and that is suitable for co-operating with said hook.

12. A clamping collar according to claim 10, **characterized in that** the assembly member (116) of the second end (12B) of one of the belt portions (12) is formed on an extension (116A) of said second end that is offset radially outwards.

13. A clamping collar according to claim 12, **characterized in that** the extension (116A) has a hooking inside edge (116', 116"), and **in that** the assembly member (117) of the second end of the other belt portion comprises a hooking edge suitable for hooking onto the hooking inside edge, on the inside of the extension.

14. A clamping collar according to any one of claims 1 to 13, **characterized in that** it is provided with an abutment (30) between the tightening tabs (14, 15) defining their minimum spacing when the collar is in the tightened state.
